# EUROPEAN PATENT SPECIFICATION

(11) **EP 2 484 217 B1**
(45) Date of publication and mention of the grant of the patent: **01.11.2017**
(21) Application number: 10820423.1
(22) Date of filing: 22.09.2010
(51) Int. Cl.: A23C 19/08, A01J 27/04

(54) **METHOD FOR PRODUCING A CHEESE-CONTAINING FOOD**
HERSTELLUNGSVERFAHREN FÜR EIN KÄSEHALTIGES NAHRUNGSMITTEL
PROCÉDÉ DE FABRICATION D'ALIMENT À BASE DE FROMAGE

(30) Priority: 29.09.2009 JP 2009224266
(43) Date of publication of application: 08.08.2012
(73) Proprietor: Morinaga Milk Industry Co., Ltd., Minato-ku Tokyo 108-8384 (JP)
(72) Inventor: KOISHIHARA Hiroshi, Zama-shi Kanagawa 252-8583 (JP); ABE Tadahiro, Zama-shi Kanagawa 252-8583 (JP); SHIRASHOJI Nobuaki, Zama-shi Kanagawa 252-8583 (JP); IMAGAWA Asashi, Ayase-shi Kanagawa 252-1116 (JP); KAWASAKI Osamu, Ayase-shi Kanagawa 252-1116 (JP); MISU Akira, Ayase-shi Kanagawa 252-1116 (JP)
(74) Representative: Vossius & Partner Patentanwälte Rechtsanwälte mbB
(86) International application number: PCT/JP2010/066395
(87) International publication number: WO 2011/040304

(56) References cited:
- WO-A1-01/80657
- WO-A1-2009/107662
- FR-A1- 2 928 071
- JP-A- 2003 259 804
- JP-A- 2005 046 139
- HIROSHI ARASE ET AL: '2B08a09 Netsu Anteisei no Sugureta Netsuhensei Whey Tanpakushitsu Biryushi no Chosei' ANNUAL MEETING OF JAPAN SOCIETY FOR BIOSCIENCE, BIOTECHNOLOGY, AND AGROCHEMISTRY 2008 KOEN YOSHISHU 05 March 2008, page 154, XP008151476

## Description

### TECHNICAL FIELD

The present invention relates to a method for producing a cheese-containing food that uses a soft cheese as the main raw material.

### BACKGROUND ART

Soft cheeses having a high moisture content are not only eaten as it is, but are also used as the raw material in all kind of cheese-containing foods. For example, Patent Document 1 describes the production of yoghurt and cream cheese foodstuffs and the like.

However, conventional foods produced using raw materials having a high soft cheese content have tended to suffer from insufficient quality in terms of smoothness in the mouth and flavor and the like. One factor that has a particular influence on these quality levels is the heating process used.

For example, if indirect heating is performed by passing steam through the cooker jacket, then charring becomes more likely. Further, in the case of circulatory heating using a steam heat exchanger/hot water heat exchanger (such as a tubular heat exchanger), the temperature variation inside the tubing tends to be large, increasing the likelihood of oil off. Furthermore, direct steam injection adds moisture to the raw material, making it difficult to control the moisture content within the product.

On the other hand, the Joule heating method heats the raw material directly by passing an electric current through the raw material, and is consequently known as a method which offers relatively simple control of the temperature, and can heat a high viscosity product comparatively uniformly (Patent Document 2). Patent document 3 discloses a method of producing a cheese, according to which a textured cheese body is subjected to a heat treatment by ohmic heating; the body obtained is cooled to a temperature below 100° C. in order to obtain a cheese; and the cheese is packaged.

### CITATION LIST

### PATENT DOCUMENTS

[Patent Document 1] Japanese Unexamined Patent Application, First Publication No. 2005-46139
[Patent Document 2] Japanese Unexamined Patent Application, First Publication No. 2007-130223
[Patent Document 3] FR 2 928 071 A1

### DISCLOSURE OF INVENTION

### PROBLEMS TO BE SOLVED BY THE INVENTION

However, when the inventors of the present invention attempted to apply the Joule heating method to a raw material having a high soft cheese content, they found that oil off frequently occurred following the heating process.

The present invention has been developed in light of the above circumstances, and has an object of producing a cheese-containing food having satisfactory quality in terms of smoothness in the mouth and flavor and the like, using a raw material having a high soft cheese content.

### MEANS TO SOLVE THE PROBLEMS

As a result of intensive investigation, the inventors of the present invention discovered that the above object could be achieved by performing heating using a Joule heater, and subsequently performing homogenization in a high speed shear cooker, and they were therefore able to complete the present invention.

The present invention has the various forms described below.
(1) A method for producing a cheese-containing food according to claim 1, the method including performing, at least twice, a heating and homogenizing process of heating a mixed raw material containing 70 to 100% by mass of a soft cheese using a Joule heater, followed by homogenizing in a high speed shear cooker.
(2) The method for producing a cheese-containing food according to (1), wherein the water content of the mixed raw material is within a range from 48 to 61% by mass.
(3) The method for producing a cheese-containing food according to (1) or (2), wherein the fat/protein mass ratio within the mixed raw material is within a range from 3.0 to 12.
(4) The method for producing a cheese-containing food according to any one of (1) to (3), wherein following the final homogenizing process, the food is packed inside a container.
(5) The method for producing a cheese-containing food according to any one of (1) to (4), wherein the heating and homogenizing process is performed using an apparatus in which the Joule heater and the high speed shear cooker are connected in an annular arrangement.

The present invention provides the following aspects.
<1> A method for producing a cheese-containing food, the method including a step (1) of heating a soft cheese-containing mixture containing 70 to 100% by mass of a soft cheese using a Joule heater, and a step (2) of stirring the heated soft cheese-containing mixture under shearing in a high speed shear cooker having two or more cutting blades which impart a rotational speed of at least 750 rpm, wherein a series of steps including the steps (1) and (2) is performed at least twice until the temperature of the soft cheese-containing mixture has reached a temperature at which the soft cheese within the raw material has completely melted.
<2> The method for producing a cheese-containing food according to <1>, wherein the water content of the soft cheese-containing mixture being the proportion of moisture within the total raw material mixture is within a range from 48 to 61% by mass.
<3> The method for producing a cheese-containing food according to <1> or <2>, wherein the fat/protein mass ratio within the soft cheese-containing mixture is within a range from 3.0 to 12.
<4> The method for producing a cheese-containing food according to any one of <1> to <3>, wherein following the final step of stirring the heated soft cheese-containing mixture under shearing in a high speed shear cooker, the soft cheese-containing mixture that has been processed in the preceding steps is packed inside a container.
<5> The method for producing a cheese-containing food according to any one of <1> to <4>, wherein for the series of steps including the steps (1) and (2), an apparatus is used in which the Joule heater and the high speed shear cooker are connected in an annular arrangement.

### EFFECT OF THE INVENTION

The present invention enables the production of a cheese-containing food having satisfactory quality in terms of smoothness in the mouth and flavor and the like, using a raw material having a high soft cheese content.

### BRIEF DESCRIPTION OF THE DRAWINGS

FIG. 1 is a structural diagram illustrating an apparatus used in a production method according to a first embodiment of the present invention.
FIG. 2 is a structural diagram illustrating an apparatus used in a production method according to a second embodiment of the present invention.
FIG. 3 is an explanatory diagram describing a production method of a comparative example 1.
FIG. 4 is an explanatory diagram describing a production method of a comparative example 2.

### EMBODIMENTS FOR CARRYING OUT THE INVENTION

### (Soft cheese-containing mixture)

The mixed raw material used in the present invention, namely the soft cheese-containing mixture, contains 70 to 100% by mass of a soft cheese. In the present invention, the term "soft cheese" describes a cheese for which the MFFB value (moisture on a fat-free basis; namely, the amount of moisture, by mass, following removal of fat from the cheese) is not less than 67%.

The soft cheese used in the present invention may be a natural cheese, a processed cheese, or a mixture thereof, although a processed cheese is prepared by heating and melting a natural cheese, and therefore lacks the cheese-like flavor of a natural cheese. As a result, the soft cheese used in the present invention is preferably composed of only natural cheese.

Examples of natural soft cheeses include cream cheese, quark, Neufchâtel, fromage blanc, topfen, mascarpone, ricotta, petit-suisse, Baker's cheese, labneh and tvorog. The soft cheese used in the present invention may also be a combination of two or more types of soft cheese.

Examples of processed soft cheeses include cheese prepared by heating, melting and subsequently cooling a raw material containing at least 60% of any of the above natural cheeses, or a combination of two or more of the above natural cheeses.

Examples of the materials besides the soft cheese in the soft cheese-containing mixture include butter, total milk protein concentrate (TMC), milk protein concentrate (MPC), whey protein concentrate (WPC), whey protein isolate (WPI), sodium caseinate, rennet casein, calcium caseinate, stabilizers, thickeners, emulsifiers, starch, processed starch, agar and water.

Specific examples of stabilizers that may be used include xanthan gum, guar gum, locust bean gum, karaya gum and tragacanth gum. Specific examples of thickeners that may be used include carrageenan, gelatin, pectins, propylene glycol alginate and alginate salts.

The emulsifiers are preferably the types of emulsifiers typically used in the production of processed cheeses, cheese foods or food items containing milk or the like as a main raw material. Specific examples of such emulsifiers include calcium citrate, trisodium citrate, potassium pyrophosphate, calcium dihydrogen pyrophosphate, disodium dihydrogen pyrophosphate, (crystalline) tetrasodium pyrophosphate, (anhydrous) tetrasodium pyrophosphate, potassium polyphosphate, sodium polyphosphate, potassium metaphosphate, sodium metaphosphate, tripotassium phosphate, tricalcium phosphate, diammonium hydrogen phosphate, ammonium dihydrogen phosphate, dipotassium hydrogen phosphate, potassium dihydrogen phosphate, calcium monohydrogen phosphate, calcium dihydrogen phosphate, (crystalline) disodium hydrogen phosphate, (anhydrous) disodium hydrogen phosphate, (crystalline) sodium dihydrogen phosphate, (anhydrous) sodium dihydrogen phosphate, (crystalline) trisodium phosphate, and (anhydrous) trisodium phosphate.

The amount added of the emulsifier, relative to the total mass of the soft cheese-containing mixture, is preferably within a range from 0.05 to 5% by mass, and more preferably from 0.1 to 3% by mass.

The water content within the soft cheese-containing mixture (the proportion of moisture within the total raw material mixture) varies depending on the target type of cheese-containing food, but when producing a portion-type cheese-containing food with smoothness in the mouth and shape retention ability, the moisture content is preferably within a range from 48 to 61 % by mass, and more preferably from 48 to 55% by mass. A higher moisture content tends to yield smoother meltability in the mouth, but if the moisture content exceeds 61% by mass, then the cream cheese flavor tends to be lost. Further, if the moisture content is too high, then not only is the cheese flavor lost, but the firmness of the product decreases, and separating the cheese-containing food from the wrapping material such as aluminum foil becomes increasingly difficult.

The fat/protein mass ratio within the soft cheese-containing mixture is preferably within a range from 3.0 to 12, and more preferably from 3.5 to 5.0. If the fat/protein mass ratio is too low, then achieving mouth melting tends to be difficult. In contrast, if the fat/protein mass ratio is too high, then oil off becomes more likely.

According to the present invention, a cheese-containing food having a fat/protein mass ratio of at least 3.0 and excellent mouth melting can be produced, and oil off can be readily prevented.

The various raw materials are mixed prior to the first introduction into the Joule heater, thus preparing a soft cheese-containing mixture (hereinafter frequently referred to as "the mixing step"). The soft cheese-containing mixture is obtained by mixing the soft cheese, or a combination of the soft cheese and other raw materials. There are no particular limitations on the mixing method used, and mixing may be performed using a high speed shear cooker or a cheese cooker with slow speed shear. Further, during the raw material mixing, preliminary heating to a temperature of approximately 30 to 50°C may be performed by steam mixing, or by using a hot water bath or steam jacket.

### (First Embodiment)

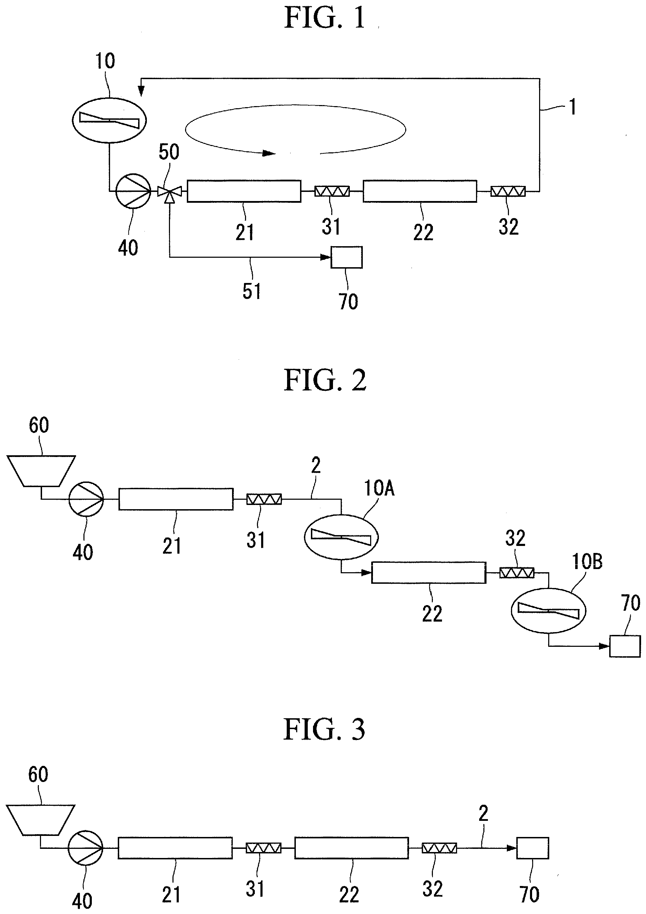

An apparatus used in a production method according to a first embodiment of the present invention is illustrated in FIG. 1. The apparatus of FIG. 1 has a high speed shear cooker 10, and Joule heaters 21 and 22 provided in sequence around a circular line 1. Further, a pump 40 is provided downstream from the high speed shear cooker 10, and static mixers 31 and 32 are provided downstream from the Joule heaters 21 and 22 respectively. Further, a three-way valve 50 is provided at a position downstream from the pump 40 and upstream from the Joule heater 21, and an outlet port 51 branches off from the three-way valve 50.

The high speed shear cooker 10 is an apparatus that uses cutting blades rotating at high speed to stir the contents while applying a shearing force. Here, the expression "rotating at high speed" means that two or more cutting blades are used to impart a rotational speed of at least 750 rpm. The rotational speed of the cutting blades of the high speed shear cooker 10 is preferably at least 1,000 rpm, and more preferably 1,500 rpm or greater. Further, a rotational speed of not more than 3,000 rpm is usually adequate.

Examples of the high speed shear cooker include cookers manufactured by Stephan Machinery GmbH or Nichiraku-Kikai Corporation.

The Joule heaters 21 and 22 are devices that pass an electric current directly through the food or drink, thereby heating the food or drink by Joule heating. The Joule heaters include a pipe that acts as the flow path through for the food or drink, and two or more annular electrodes disposed inside the pipe with a predetermined spacing therebetween in the direction of flow.

The Joule heaters themselves are not fitted with a stirring mechanism, and therefore in the present embodiment, the static mixers 31 and 32 are disposed downstream from the Joule heaters. The static mixers are mixers that lack a drive unit, and are also known as inline mixers. The static mixers are fitted with helical shape elements inside a pipe. As the food or drink passes these elements, it is subjected to division, revolution and/or counter-revolution by the elements, and undergoes mixing with exposure to almost no shearing forces.

A centrifugal pump or metering pump or the like may be used as the pump 40.

The three-way valve 50 is structured so that the pump 40 is disposed at the inlet port, the Joule heater 21 is disposed at the normal open port, and the outlet port 51 is disposed at the normal close port.

When producing a cheese-containing food using the apparatus illustrated in FIG. 1, preparation of a soft cheese-containing mixture is performed by first placing the soft cheese, or the soft cheese and the other raw materials, in the high speed shear cooker 10. The introduced raw material is then stirred under shearing inside the high speed shear cooker 10 to obtain a soft cheese-containing mixture, and the pump 40 is then activated with the normal open port of the three-way valve 50 in the open position. This causes the soft cheese-containing mixture to be circulated once or more around the circular line 1. In other words, the soft cheese-containing mixture is circulated and passes sequentially through the Joule heater 21, the static mixer 31, the Joule heater 22, the static mixer 32, the high speed shear cooker 10 and the pump 40. During this circulation, the soft cheese-containing mixture is heated incrementally by the Joule heaters 21 and 22. The heating is conducted until a temperature is reached at which the soft cheese within the raw material melts completely. Specifically, heating is preferably performed until a temperature of 70 to 100°C is reached, and a temperature of 80 to 90°C is more preferred. In this description, the above process of heating the soft cheese-containing mixture using the Joule heaters and then stirring the mixture under shearing in the high speed shear cooker to achieve homogenization may also be referred to as "the heating and homogenizing process".

Here, "homogenizing" of the soft cheese-containing mixture describes the process of stirring the soft cheese-containing mixture under shearing in the high speed shear cooker, until a state is reached wherein comparison of any random portion of the soft cheese-containing mixture with any other random portion reveals that the compositional ratio between the components within the two portions are the same, and the various properties of the two portions are also the same.

The above-mentioned circulation is performed at least twice, and is preferably performed 3 or more times, and more preferably 4 or more times. Typically, 10 circulations is sufficient. In other words, the heating and homogenizing process composed of heating by the Joule heaters followed by homogenization in the high speed shear cooker is performed at least twice, preferably 3 or more times, and more preferably 4 or more times. Typically, 10 repetitions is sufficient.

If the number of circulation repetitions is low (when the number of repetitions of the heating and homogenizing process is small), namely, when the number of repetitions is small for the series of steps including the above-mentioned step (1) of heating a soft cheese-containing mixture containing 70 to 100% by mass of a soft cheese using a Joule heater, and the above step (2) of stirring the heated soft cheese-containing mixture under shearing in a high speed shear cooker, the amount of temperature increase imparted by passage through each of the Joule heaters 21 and 22 must be increased. As a result, the speed with which the soft cheese-containing mixture passes through the Joule heaters 21 and 22 must be reduced. Particularly in the case of only a single circulation (namely, only one occurrence of the heating and homogenizing process, and a single passage through the Joule heaters 21 and 22), the exit temperature from the Joule heater 22 must have reached the desired temperature in a single step, and therefore the speed with which the soft cheese-containing mixture passes through the Joule heaters 21 and 22 must be slowed dramatically. In the case of only one circulation, oil off may not be able to be prevented satisfactorily.

Once the temperature of the soft cheese-containing mixture has reached a temperature at which the soft cheese within the raw material has completely melted, the normal open port of the three-way valve 50 is opened, and the melted cheese-containing food is extracted through the outlet port 51 to a packing machine 70, and subsequently packed inside a container (hereinafter this step is frequently referred to as "the container packing step"). This yields the cheese-containing food packaged inside a container.

Examples of materials that may be used for the container include suitable materials such as aluminum foil, plastic and paper-based materials. Of these materials, aluminum foil is cheap and exhibits excellent preservation of the packaged contents, and is consequently preferred. A specific example of the shape of a container that uses an aluminum foil is the so-called 6P cheese shape disclosed in Japanese Unexamined Patent Application, First Publication No. Hei 7-313054, composed of a combination of a bottom shell foil and a top foil.

### (Second Embodiment)

An apparatus used in a production method according to a second embodiment of the present invention is illustrated in FIG. 2. In FIG. 2, those structural members that are the same as those shown in FIG. 1 are labeled with the same reference signs as FIG. 1, and detailed descriptions of these structural members are omitted.

The apparatus of FIG. 2 has the Joule heater 21, a high speed shear cooker 10A, the Joule heater 22, and a high speed shear cooker 10B provided in sequence along a serial line (non-circular line) 2 that starts at a cheese cooker with slow speed shear 60. In other words, the Joule heaters and the high speed shear cookers are provided in an alternating arrangement.

Further, the pump 40 is provided downstream from the cheese cooker with slow speed shear 60, and the static mixers 31 and 32 are provided downstream from the Joule heaters 21 and 22 respectively.

The high speed shear cookers 10A and 10B are the same as the high speed shear cooker 10 of FIG. 1.

When producing a cheese-containing food using the apparatus illustrated in FIG. 2, a soft cheese or a combination of a soft cheese and other raw materials is first placed in the cheese cooker with slow speed shear 60. Following the formation of a soft cheese-containing mixture in the cheese cooker with slow speed shear 60, the pump 40 is activated. This causes the soft cheese-containing mixture to travel along the serial line 2. In other words, the soft cheese-containing mixture passes sequentially through the Joule heater 21, the static mixer 31, the high speed shear cooker 10A, the Joule heater 22, the static mixer 32, and the high speed shear cooker 10B. During this passage, the soft cheese-containing mixture is heated incrementally by the Joule heaters 21 and 22. The heating is conducted so that a temperature is reached at which the soft cheese within the raw material melts completely.

In the apparatus illustrated in FIG. 2, the heating and homogenizing process of heating the soft cheese-containing mixture with a Joule heater and then homogenizing the mixture by stirring under shearing in a high speed shear cooker is performed twice.

Following extraction of the soft cheese-containing mixture from the high speed shear cooker 10B, the mixture is transported to the packing machine 70 and packed inside a container (the container packing step). This yields the cheese-containing food packaged inside a container.

The material and shape of the container may be the same as those described above for the first embodiment.

### (Other Embodiments)

An apparatus similar to that illustrated in FIG. 1, which excludes the Joule heater 22 and the static mixer 32, may also be used. In such a case, the number of circulation repetitions should be increased. This is because heating the mixture too much in a single Joule heater tends to increase the likelihood of oil off.

In the apparatus illustrated in FIG. 2, an additional one or more Joule heaters and static mixers may be included upstream of the high speed shear cooker 10A or the high speed shear cooker 10B. Further, an additional one or more Joule heaters, static mixers and high speed shear cookers may be included downstream from the high speed shear cooker 10B.

In any of these cases, it is preferable that no heating with a Joule heater is performed following the final heating and homogenizing process. For example, for the apparatus illustrated in FIG. 2, including only an additional Joule heater, or a combination of only a Joule heater and a static mixer, downstream from the high speed shear cooker 10B is undesirable. It is preferable that homogenization in a high speed shear cooker is performed after the heating by a Joule heater.

### EXAMPLES

Although the present invention is described below in further detail using a series of test examples and examples, the present invention is in no way limited by the examples presented below.

### <Test Example 1>

### (Purpose)

This test was performed with the purposes of confirming the effect that the moisture content had on the product quality, and determining an appropriate moisture content.

### (Sample preparation)

With the exception of altering the blend amounts of the raw materials as shown in Table 1, soft cheese-containing mixtures were heated, extracted through the outlet port 51 to the packing machine 70, and packed in aluminum foil in the same manner as that described below for Example 1, thus yielding samples 1 to 5. The blend proportion shown for sample number 3 is the same as that used for the sample of Example 1.

**[Table 1]**

| Sample | 1 | 2 | 3 | 4 | 5 |
|---|---|---|---|---|---|
| Cream cheese (kg) | 180 | 180 | 180 | 180 | 180 |
| Butter (kg) | 32 | 21 | 5 | 6 | 6 |
| TMP (kg) | 10.5 | 8 | 4 | 4 | 4 |
| Xanthan gum (kg) | 0.1 | 0.1 | 0.1 | 0.1 | 0.1 |
| Sodium polyphosphate (kg) | 1 | 1 | 1 | 1 | 1 |
| Water (kg) | 0 | 0 | 15 | 45 | 58 |

### (Evaluation methods)

The numerical values and the like that represent the results of the evaluations described below are shown in Table 2 for each of the samples 1 to 5.

### a) Moisture content

The moisture content was calculated based of the moisture content of each of the raw materials and the amount of the raw materials used.

### b) Smoothness

The smoothness was evaluated by 10 panelists against the criteria listed below, and the average value of the results was recorded.
5 Extremely smooth
4 Smooth
3 Slightly smooth
2 Minimal sensation of smoothness
1 Not smooth at all

### c) Cream cheese flavor

The cream cheese flavor was evaluated by 10 panelists against the criteria listed below, and the average value of the results was recorded.
5 Strong flavor detected
4 Some flavor detected
3 Slight flavor detected
2 Minimal flavor detected
1 No flavor detected

### d) Hardness

The hardness was measured using a Creep Meter RE2-33005S manufactured by Yamaden Co., Ltd., under conditions including a plunger diameter of 8 mm and a probe speed of 5 mm/s, and the plunger was inserted to 11.25 mm.

### e) Peelability

The peelability was evaluated by packing the soft cheese-containing mixture that had been homogenized using the prescribed method in an aluminum foil, cooling the packed product to 10°C, and then peeling off the aluminum foil and observing the degree of peelability of the mixture from the aluminum foil. The result was recorded using the symbol O in those cases where the peelability was good and almost no cheese adhesion to the aluminum foil was observed, using the symbol Δ in those cases where partial cheese adhesion was observed but peeling was still possible, or using the symbol × in those cases where the cheese adhered to the aluminum foil, making peeling impossible.

**[Table 2]**

| Sample | 1 | 2 | 3 | 4 | 5 |
|---|---|---|---|---|---|
| Water content (% by mass) | 46 | 48 | 55 | 61 | 63 |
| Smoothness | 2.2 | 3.8 | 4.0 | 4.2 | 4.1 |
| Cream cheese flavor | 3.1 | 4.4 | 4.5 | 3.7 | 2.2 |
| Hardness | 13.9 | 10.3 | 5.1 | 3.5 | 2.6 |
| Peelability | ○ | ○ | ○ | Δ | × |
| Overall result | × | ○○ | ○○ | ○ | × |

### (Results)

As illustrated in Table 2, the cheese-containing food exhibited excellent smoothness and flavor when the moisture content was within a range from 48 to 61% by mass. Further, as the moisture content increased, the cheese-containing food displayed reduced hardness and became more prone to adhesion to the aluminum foil, but was still able to be peeled from the aluminum foil up to a moisture content of 61% by mass.

From the above results it was evident that in order to produce a portion-type cheese having smoothness in the mouth, control of the moisture content was very important, and restricting the moisture content to a value from 48 to 61% by mass was preferable.

Further, it was also evident that by using the method of the present invention, the moisture content of the final product could be controlled by controlling the moisture content within the raw material, meaning the method is useful in the production of portion-types cheese having smoothness in the mouth.

### <Test Example 2>

### (Purpose)

This test was performed with the purpose of confirming the effects that the flow rate and the number of circulation repetitions had on the quality of the cheese-containing food.

### (Sample preparation)

With the exception of altering the number of circulation repetitions and the flow rate as shown in Table 3, soft cheese-containing mixtures were heated, extracted through the outlet port 51 to the packing machine 70, and packed in aluminum foil in the same manner as that described below for Example 1, thus yielding samples 11 to 15. The conditions for sample number 15 are the same as the conditions used for Example 1.

### (Evaluation methods)

The numerical values and the like that represent the results of the evaluations described below are shown in Table 3 for each of the samples 11 to 15.

### f) Number of circulation repetitions

The number of circulation repetitions describes the number of times the soft cheese-containing mixture passed through the Joule heater 21 prior to extraction through the outlet port 51.

### g) Flow rate

The flow rate was measured using an MGG10C device manufactured by Yamatake Corporation, which was installed downstream from the static mixer 32.

The flow rates for the examples and comparative examples described below were also measured in this manner.

### h) Final temperature

The final temperature was measured using a thermometer attached to the high speed shear cooker 10, and describes the temperature immediately prior to extraction of the soft cheese-containing mixture into the outlet port 51.

### i) Oil off

The sample was packed in an aluminum foil, and following cooling to 10°C, was evaluated visually for the presence of oil off. The result was recorded using the symbol O in those cases where oil off was not detected, or using the symbol × in those cases where oil off was detected.

**[Table 3]**

| Sample | 11 | 12 | 13 | 14 | 15 |
|---|---|---|---|---|---|
| Circulation repetitions (number) | 1 | 2 | 3 | 4 | 5 |
| Flow rate (L/hour) | 1000 | 2200 | 3200 | 4300 | 5400 |
| Final temperature (°C) | 88 | 88 | 88 | 88 | 88 |
| Oil off (visual) | × | ○ | ○ | ○ | ○ |

### (Results)

As illustrated in Table 3, it was discovered that oil off occurred when the number of circulation repetitions was 1.

### <Example 1>

### (Raw materials)

The raw materials for the soft cheese-containing mixture were used in the compositional ratio listed below.

The fat content within each raw material was determined using the Roese-Gottlieb method. The protein content within each raw material was determined using the Kjeldahl method. The moisture content within each raw material was determined using a sand mix drying method.

Cream cheese (Australian Cream Cheese, manufactured by Kraft Foods Inc.): 180 kg
Fat content: 34% by mass
Protein content: 8% by mass
Fat/protein mass ratio: 4.2
Water content: 54% by mass

Butter (unsalted butter, manufactured by Morinaga Milk Industry Co., Ltd.): 5 kg
Fat content: 83% by mass
Protein content: 0.5% by mass
Fat/protein mass ratio: 166.2
Water content: 15.5% by mass

TMP (Promilk 85Y, manufactured by Ingredia Group): 4 kg
   Fat content: 1% by mass
   Protein content: 81 % by mass
   Fat/protein mass ratio: 0.012
   Water content: 5% by mass
Xanthan gum: 0.1 kg
Sodium polyphosphate: 1 kg
Water: 15 kg

The compositional ratio within the overall raw material (the combined raw material mixture) was as listed below.
Fat content: 33% by mass
Protein content: 9% by mass
Fat/protein mass ratio: 3.8
Water content: 54% by mass

### (Apparatus)

An apparatus having the structure illustrated in FIG. 1 was used.

A Stephan cooker manufactured by Stephan Machinery GmbH was used as the high speed shear cooker 10. The rotational speed of the rotating blades was set to 1500 rpm. FJCC2S2M heaters manufactured by Frontier Engineering Co., Ltd. were used as the Joule heaters 21 and 22. Mixers manufactured by Frontier Engineering Co., Ltd. were used as the static mixers 31 and 32. A WRU-130 pump manufactured by Waukesha was used as the pump 40. An ML-4 device manufactured by Sapal Co., Ltd. was used as the packing machine 70.

### (Production method)

All of the above raw materials were preheated to a temperature of 40°C, and were then introduced into the high speed shear cooker 10 and stirred under heat for 2 minutes to form a soft cheese-containing mixture. The circulation heating process was then started. Once the soft cheese-containing mixture had been circulated around the flow path and returned to the high speed shear cooker 10, a further 2 minutes of stirring under heat was performed under the same conditions as those used at the start of the process.

The flow rates within the Joule heaters 21 and 22 during circulation, and the temperature within the various devices during each circulation repetition are listed in Table 4. Following 4 repetitions of the circulation of the soft cheese-containing mixture, the mixture was extracted through the outlet port 51 to the packing machine 70, and packed in an aluminum foil.

In Table 4, the numerical values listed in the column entitled "Inside cooker" indicate the temperature measured immediately prior to discharge from the high speed shear cooker 10, using a thermometer fitted inside the high speed shear cooker 10. The numerical values in the column entitled "Joule inlet" indicate the temperature measured using an NPS-102 device manufactured by Nishino Machinery Corporation installed at the inlet of the Joule heater 21. The numerical values in the column entitled "Joule outlet" indicate the temperature measured using an NPS-102 device manufactured by Nishino Machinery Corporation installed at the outlet of the Joule heater 22.

**[Table 4]**

| Circulation repetitions (number) | Inside cooker (°C) | Joule inlet (°C) | Joule outlet (°C) | Flow rate (L/hour) |
|---|---|---|---|---|
| 1 | 54 | 52 | 60 | 5400 |
| 2 | 66 | 64 | 72 | |
| 3 | 76 | 74 | 81 | |
| 4 | 85 | 83 | 91 | |
| 5 | 88 | | | |

### <Example 2>

### (Raw materials)

The same raw materials as Example 1 were used.

### (Apparatus)

An apparatus having the structure illustrated in FIG. 2 was used.

The same high speed shear cooker 10 as that described for Example 1 was used as the high speed shear cookers 10A and 10B, and these cookers were operated under the same conditions as those described for Example 1.

The same Joule heaters 21 and 22 as those described for Example 1 were used as the Joule heaters 21 and 22, and these heaters were operated under the same conditions as those described for Example 1. The static mixers 31 and 32, the pump 40 and the packing machine 70 were all the same as those used in Example 1.

An MLM-90074 device manufactured by Nichiraku-Kikai Corporation was used as the cheese cooker with slow speed shear 60. The rotational speed of the stirring blades was set to 60 rpm.

### (Production method)

All of the above raw materials were preheated to a temperature of 40°C, and were then introduced into the cheese cooker with slow speed shear 60 and heated with stirring for 5 minutes to form a soft cheese-containing mixture. Subsequently, the soft cheese-containing mixture was pumped through the Joule heater 21 at the flow rate shown in Table 5, and was then fed into the high speed shear cooker 10A. Following stirring under heat for 1 minute in the high speed shear cooker 10A, the soft cheese-containing mixture was pumped through the Joule heater 22 at the flow rate shown in Table 5, and was then fed into the high speed shear cooker 10B. Following stirring under heat for 1 minute in the high speed shear cooker 10B, the soft cheese-containing mixture was fed into the packing machine 70 and packed in an aluminum foil.

In Table 5, the numerical values in the column entitled "Inside melting kettle" indicate the temperature measured immediately prior to discharge from the cheese cooker with slow speed shear 60, using a thermometer fitted inside the cheese cooker with slow speed shear 60. The numerical values in the column entitled "Joule inlet" indicate the temperature measured using an NPS-102 device manufactured by Nishino Machinery Corporation installed at the inlet of the Joule heater 21. The numerical values in the column entitled "mid-Joule" indicate the temperature measured using an NPS-102 device manufactured by Nishino Machinery Corporation installed at a position midway along the Joule heater 21. The numerical values in the column entitled "Inside cooker A" indicate the temperature measured immediately prior to discharge from the high speed shear cooker 10A, using a thermometer fitted inside the high speed shear cooker 10A. The numerical values in the column entitled "Joule outlet" indicate the temperature measured using an NPS-102 device manufactured by Nishino Machinery Corporation installed at the outlet of the Joule heater 22. The numerical values in the column entitled "Inside cooker B" indicate the temperature measured immediately prior to discharge from the high speed shear cooker 10B, using a thermometer fitted inside the high speed shear cooker 10B.

### <Comparative Example 1>

### (Raw materials)

The same raw materials as Example 1 were used.

### (Apparatus)

An illustrated in FIG. 3, with the exception of excluding the high speed shear cookers 10A and 10B, an apparatus having the same structure as Example 2 was used, and unless specified otherwise, the production method described below was executed using the same conditions as Example 2.

### (Production method)

All of the above raw materials were preheated to a temperature of 40°C, and were then introduced into the cheese cooker with slow speed shear 60 and heated with stirring for 5 minutes to form a soft cheese-containing mixture. Subsequently, the soft cheese-containing mixture was pumped through the Joule heater 21 and then through the Joule heater 22, before being fed into the packing machine 70 and packed in an aluminum foil. The flow rates during passage of the mixture through the Joule heaters 21 and 22, and the temperatures at the various locations were as listed in Table 5.

### <Comparative Example 2>

### (Raw materials)

The same raw materials as Example 1 were used.

### (Apparatus)

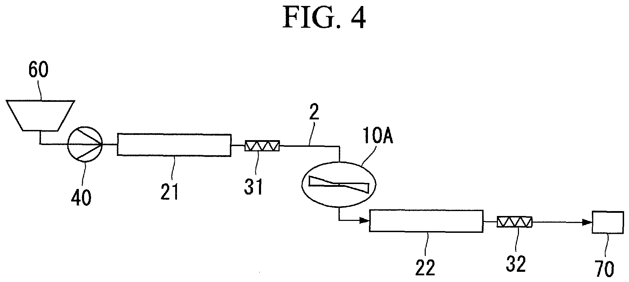

An illustrated in FIG. 4, with the exception of excluding the high speed shear cooker 10B, an apparatus having the same structure as Example 2 was used, and unless specified otherwise, the production method described below was executed using the same conditions as Example 2.

### (Production method)

All of the above raw materials were preheated to a temperature of 40°C, and were then introduced into the cheese cooker with slow speed shear 60 and heated with stirring for 5 minutes to form a soft cheese-containing mixture. Subsequently, the soft cheese-containing mixture was pumped through the Joule heater 21 at the flow rate shown in Table 5, and was then fed into the high speed shear cooker 10A. Following stirring under heat for 1 minute in the high speed shear cooker 10A, the soft cheese-containing mixture was pumped through the Joule heater 22 at the flow rate shown in Table 5, and was then fed into the packing machine 70 and packed in an aluminum foil. The temperatures at the various locations were as listed in Table 5.

**[Table 5]**

| | Inside cheese cooker (°C) | Joule inlet (°C) | mid-Joule (°C) | Inside cooker A (°C) | Joule outlet (°C) | Inside cooker B (°C) | Flow rate (L/hour) | Oil off (visual) |
|---|---|---|---|---|---|---|---|---|
| Example 2 | 40 | 40 | 55 | 55 | 85 | 85 | 214 | ○ |
| Comparative example 1 | 40 | 40 | 55 | 55 | 85 | | 260 | × |
| Comparative example 2 | 40 | 40 | 55 | | 85 | | 214 | × |

### (Results)

From the results in Table 5 it was evident that the present invention was able to suppress oil off.

### INDUSTRIAL APPLICABILITY

The present invention is useful in the production of cheese-containing foods such as portion-type cheeses.

### DESCRIPTION OF THE REFERENCE SIGNS

- 1:: Circular line
- 2:: Serial line
- 10:: High speed shear cooker
- 21:: Joule heater
- 22:: Joule heater
- 31:: Static mixer
- 32:: Static mixer
- 70:: Packing machine

## Claims

1. A method for producing a cheese-containing food, the method comprising:
a step (1) of heating a soft cheese-containing mixture comprising 70 to 100% by mass of a soft cheese using a Joule heater, and
a step (2) of stirring the heated soft cheese-containing mixture under shearing in a high speed shear cooker having two or more cutting blades which impart a rotational speed of at least 750 rpm, wherein
a series of steps including the steps (1) and (2) is performed at least twice until the temperature of the soft cheese-containing mixture has reached a temperature at which the soft cheese within the raw material has completely melted.

2. The method for producing a cheese-containing food according to claim 1, wherein a water content of the soft cheese-containing mixture being the proportion of moisture within the total raw material mixture is within a range from 48 to 61% by mass.

3. The method for producing a cheese-containing food according to claim 1 or 2, wherein a fat/protein mass ratio within the soft cheese-containing mixture is within a range from 3.0 to 12.

4. The method for producing a cheese-containing food according to any one of claims 1 to 3, wherein following a final step of stirring the heated soft cheese-containing mixture under shearing in a high speed shear cooker, the soft cheese-containing mixture that has been processed in preceding steps is packed inside a container.

5. The method for producing a cheese-containing food according to any one of claims 1 to 4, wherein for the series of steps including the steps (1) and (2), an apparatus is used in which the Joule heater and the high speed shear cooker are connected in an annular arrangement.

## Patentansprüche

1. Ein Verfahren zur Herstellung eines käsehaltigen Nahrungsmittels, wobei das Verfahren umfasst:
einen Schritt (1) des Erwärmens eines weichkäsehaltigen Gemisches, umfassend 70 bis 100 Massen-% eines Weichkäses, unter Verwendung eines Jouleschen Heizelements, und
einen Schritt (2) des Rührens des erwärmten weichkäsehaltigen Gemisches unter Scherung in einer Hochgeschwindigkeitsschervorrichtung mit zwei oder mehr Schneidklingen, welche eine Rotationsgeschwindigkeit von mindestens 750 U/min ausüben, wobei
eine Reihe von Schritten, einschließlich der Schritte (1) und (2), mindestens zweimal durchgeführt wird, bis die Temperatur des weichkäsehaltigen Gemisches eine Temperatur erreicht hat, bei welcher der Weichkäse innerhalb des Rohmaterials vollständig geschmolzen ist.

2. Das Verfahren zur Herstellung eines käsehaltigen Nahrungsmittels gemäß Anspruch 1, wobei ein Wassergehalt des weichkäsehaltigen Gemisches, der der Anteil von Feuchtigkeit innerhalb des gesamten Rohmaterialgemisches ist, in einem Bereich von 48 bis 61 Massen-% liegt.

3. Das Verfahren zur Herstellung eines käsehaltigen Nahrungsmittels gemäß Anspruch 1 oder 2, wobei ein Massenverhältnis von Fett/Protein innerhalb des weichkäsehaltigen Gemisches in einem Bereich von 3,0 bis 12 liegt.

4. Das Verfahren zur Herstellung eines käsehaltigen Nahrungsmittels gemäß einem der Ansprüche 1 bis 3, wobei nach einem abschließenden Schritt des Rührens des erwärmten weichkäsehaltigen Gemisches unter Scherung in einer Hochgeschwindigkeitsschervorrichtung das weichkäsehaltige Gemisch, das in den vorhergehenden Schritten verarbeitet wurde, in einen Behälter gepackt wird.

5. Das Verfahren zur Herstellung eines käsehaltigen Nahrungsmittels gemäß einem der Ansprüche 1 bis 4, wobei für die Reihe von Schritten, einschließlich der Schritte (1) und (2), ein Gerät verwendet wird, in welchem das Joulesche Heizelement und der Hochgeschwindigkeitsscherkocher in einer ringförmigen Anordnung verbunden sind.

## Revendications

1. Méthode de production d'un aliment contenant du fromage, la méthode comprenant :
une étape (1) de chauffage d'un mélange contenant du fromage à pâte molle comprenant 70 à 100 % en masse d'un fromage à pâte molle en utilisant un élément chauffant par effet Joule, et
une étape (2) de brassage du mélange contenant du fromage à pâte molle chauffé sous cisaillement dans un cuiseur à vitesse de cisaillement élevée, ayant deux ou plus lames de coupe qui confèrent une vitesse de rotation d'au moins 750 tr/min, dans laquelle
une série d'étapes comprenant les étapes (1) et (2) est effectuée au moins deux fois jusqu'à ce que la température du mélange contenant du fromage à pâte molle ait atteint une température à laquelle le fromage à pâte molle à l'intérieur des matières premières a complètement fondu.

2. Méthode de production d'un aliment contenant du fromage selon la revendication 1, dans laquelle la teneur en eau du mélange contenant du fromage à pâte molle étant la proportion d'humidité à l'intérieur du mélange total des matières premières, est située dans la plage allant de 48 à 61 % en masse.

3. Méthode de production d'un aliment contenant du fromage selon la revendication 1 ou 2, dans laquelle un rapport en masse graisses/protéines dans le mélange contenant du fromage à pâte molle est situé dans la plage allant de 3,0 à 12.

4. Méthode de production d'un aliment contenant du fromage selon l'une quelconque des revendications 1 à 3, dans laquelle, après une étape finale de brassage du mélange contenant du fromage à pâte molle chauffé sous cisaillement dans un cuiseur à vitesse de cisaillement élevée, le mélange contenant du fromage à pâte molle qui a été traité dans les étapes précédentes est conditionné à l'intérieur d'un récipient.

5. Méthode de production d'un aliment contenant du fromage selon l'une quelconque des revendications 1 à 4, dans laquelle, pour la série d'étapes comprenant les étapes (1) et (2), est utilisé un dispositif dans lequel l'élément chauffant par effet Joule et le cuiseur à vitesse de cisaillement élevée sont connectés selon un agencement annulaire.
